# EUROPEAN PATENT APPLICATION

(11) **EP 3 805 170 A1**
(43) Date of publication of application: **14.04.2021**
(21) Application number: 19814889.2
(22) Date of filing: 04.06.2019
(51) Int. Cl.: C03C 17/32, B32B 17/10, B60J 1/00

(54) **WIND SHIELD**

(30) Priority: 04.06.2018 JP 2018107314
(71) Applicant: NIPPON SHEET GLASS COMPANY, LIMITED, Tokyo 108-6321 (JP)
(72) Inventor: MIYAMOTO, Yoko, Tokyo 108-6321 (JP); SHIMOKAWA, Yohei, Tokyo 108-6321 (JP); OYA, Kazuaki, Tokyo 108-6321 (JP)
(74) Representative: Mewburn Ellis LLP
(86) International application number: PCT/JP2019/022179
(87) International publication number: WO 2019/235479

(57) **Abstract**

The present invention is a wind shield on which an information acquisition device configured to acquire information from the outside of a vehicle by emitting and/or receiving light can be arranged, the wind shield including a laminated glass, and an antifog film that is arranged on a surface on the vehicle interior side of the laminated glass and that contains a water absorbent polymer, in which the antifog film has a layer that does not contain an alkaline component on a surface of the antifog film.

## Description

### Technical Field

The present invention relates to a wind shield on which an information acquisition device for acquiring information from the outside of a vehicle by emitting and/or receiving light can be arranged, and a method for manufacturing an antifog sheet that is attachable to the wind shield.

### Background Art

In recent years, safety performance of automobiles has dramatically improved. In order to avoid a collision with a preceding vehicle, for example, a safety system is proposed in which the distance to the preceding vehicle and the speed of the preceding vehicle are detected and a brake automatically engages in an abnormal approach to the preceding vehicle. In such a system, the distance to the preceding vehicle and the like are measured using a laser radar or a camera. In general, a laser radar or a camera is arranged on the inner side of a wind shield, and the measurements are performed by emitting light such as infrared rays forward (e.g., Patent Literature 1) .

### Citation List

### Patent Literature

Patent Literature 1: JP 2006-96331A

### Summary of Invention

### Technical Problem

As described above, a measuring apparatus such as a laser radar or a camera is arranged on an inner surface side of a glass plate constituting a wind shield, and emits or receives light via the glass plate. Incidentally, the glass plates sometimes fog up on cold days or in cold regions . However, if a glass plate fogs up, there is a risk that a measuring apparatus may not be able to accurately emit or receive light. Accordingly, the distance between vehicles or the like may not be calculated accurately.

Such an issue may arise not only in devices for measuring the distance between vehicles but also in information acquisition devices in general that acquire information from the outside of a vehicle by receiving light emitted by rain sensors, light sensors, and optical beacons, for example.

It is conceivable to use a glass plate that has an antifog film in at least a portion located on an inner surface side of the glass plate that emits or receives light as a method for resolving this issue. Although the glass plate may be directly coated with the antifog film, the process thereof is complicated and expensive, and it is extremely difficult to perform a coating process once the glass plate has been attached to a vehicle.

In view of this, it is conceivable to prepare an antifog sheet in which one main surface of a transparent and soft base film has an antifog layer containing a water absorbent resin and the like, and the other main surface has an antifog sheet with a transparent adhesive layer in advance, and to attach the antifog sheet to a predetermined portion of the glass plate using the adhesive layer. However, such an antifog layer is problematic in that whitening will occur due to the water absorbent resin. Also, similar to a case where glass fogs up, if such whitening occurs, there is a risk that a measuring apparatus may be unable to accurately emit or receive light. Accordingly, the distance between vehicles and the like may not be accurately calculated, or a camera may not be able to take images of situation forward of the vehicle.

The present invention was made in order to resolve the foregoing issues, and it is an object thereof to provide a wind shield to which the information acquisition device that emits and/or receives light through the glass plate can be attached, and in which light can be accurately emitted and/or received and information can be accurately processed, and to provide a method for manufacturing an antifog sheet that is to be used for the wind shield.

### Solution to Problem

The present invention is a wind shield on which an information acquisition device configured to acquire information from the outside of a vehicle by emitting and/or receiving light can be arranged, the wind shield including a laminated glass, and an antifog film that is arranged on a surface on the vehicle interior side of the laminated glass and that contains a water absorbent polymer, in which the antifog film has a layer that does not contain an alkaline component on a surface of the antifog film.

In the above-described wind shield, the antifog film may have a thickness of 2 to 20 µm.

In the above-described wind shield, the antifog film may contain a water repellent component.

The present invention is a method for manufacturing an antifog sheet that is attachable to a wind shield on which an information acquisition device configured to acquire information from the outside of a vehicle by emitting and/or receiving light can be arranged, the method including a first step of applying, to a base sheet, a solution for an antifog film containing a water absorbing polymer, a second step of forming an antifog film by curing the solution for an antifog film by heating the base sheet, a third step of passing the base sheet through water, and a fourth step of heating the base sheet.

In the above-described method for manufacturing an antifog sheet, the water may have a temperature of 10°C to 80°C.

In the above-described method for manufacturing an antifog sheet, the water may contain alcohol.

### Advantageous Effects of Invention

According to the present invention, it is possible to accurately emit and/or receive light, and accurately process information in a wind shield to which an information acquisition device that emits and/or receives light via a glass plate is attachable.

### Brief Description of Drawings

FIG. 1 is a plan view showing one embodiment of a wind shield according to the present invention.
FIG. 2 is a cross-sectional view of FIG. 1.
FIG. 3 is a cross-sectional view of an interlayer.
FIG. 4 is a block diagram showing a schematic configuration of an in-vehicle system.
FIG. 5 is a cross-sectional view of an antifog laminate.
FIG. 6 is a side view showing an apparatus for manufacturing an antifog laminate.
FIG. 7 is a side view showing an apparatus for manufacturing the antifog laminate.
FIG. 8 is a side view showing an apparatus for manufacturing the antifog laminate.
FIG. 9 is a photograph obtained by observing a surface of an antifog film of Comparative Example 1, using an optical microscope.
FIG. 10 shows photographs obtained by observing surfaces of antifog films of Example 1 and Comparative Example 1, using an electron microscope.
FIG. 11 is a diagram showing spectral distributions obtained by analyzing Example 1 and Comparative Example 1 through EDX.
FIG. 12 is a diagram showing a spectral distribution obtained by analyzing a polyvinyl acetal resin through EDX.
FIG. 13 shows graphs illustrating a change in the Haze ratio in acceleration tests on Example 1 and Comparative Example 1.
FIG. 14 is a schematic diagram of an apparatus for evaluating antifog performance.
FIG. 15 is a graph showing antifog performance according to Example 1 and Comparative Example 1.
FIG. 16 is a graph showing changes in the Haze ratio in acceleration tests on Examples 2 to 5 and Comparative Example 1.

### Description of Embodiments

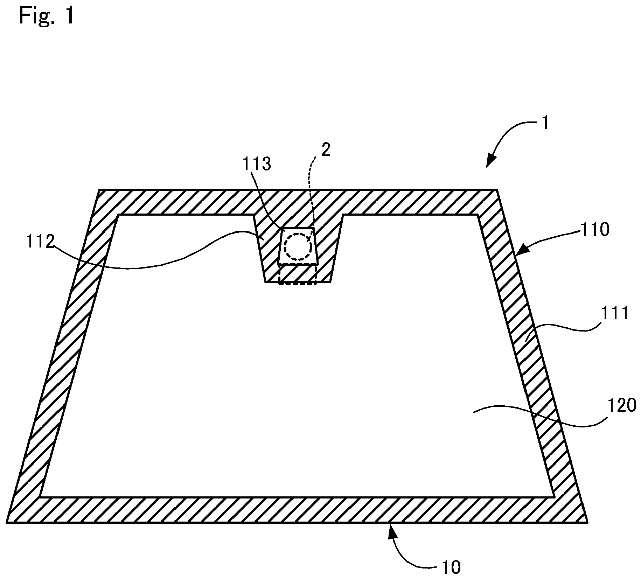

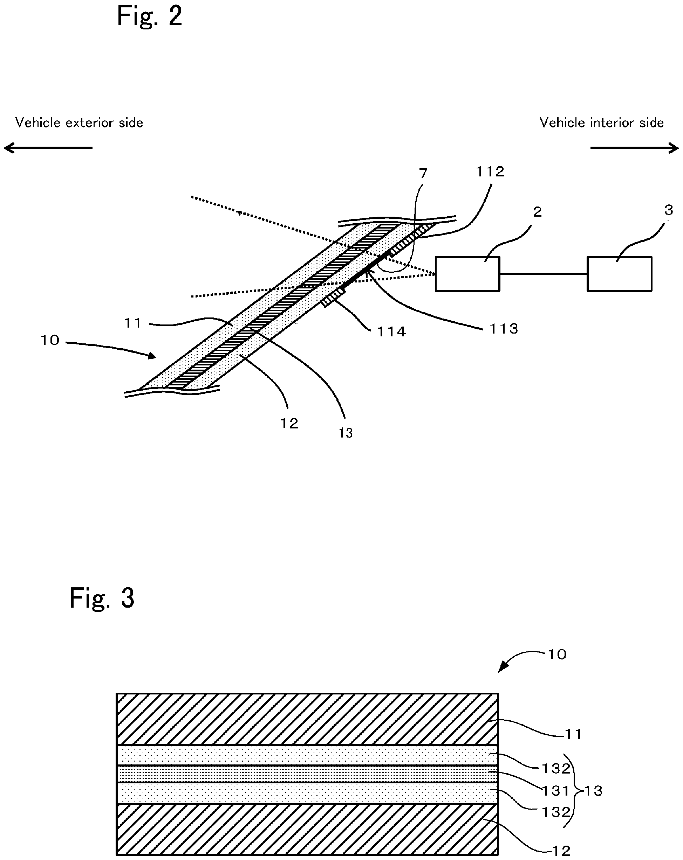

First, the configuration of a wind shield according to this embodiment will be described using FIGS. 1 and 2. FIG. 1 is a plan view of the wind shield, and FIG. 2 is a cross-sectional view of FIG. 1. Note that the "up-down direction" in FIG. 1 refers to "upper and lower", "perpendicular", and "vertical", and the "left-right direction" in FIG. 1 refers to "horizontal" for convenience of description. FIG. 1 illustrates a wind shield when viewed from the vehicle interior side. That is to say, the back side of the paper plane of FIG. 1 refers to the vehicle exterior side, and the front side of the paper plane of FIG. 1 refers to the vehicle interior side.

This wind shield is provided with a substantially rectangular laminated glass 10, and is installed in a vehicle body in an inclined state. Also, an inner surface 130 of the laminated glass 10 that faces the vehicle interior side is provided with a mask layer 110 that blocks a field of view from the outside of a vehicle, and an imaging device 2 is arranged to be concealed by the mask layer 110 from the outside of the vehicle. However, the imaging device 2 is a camera for taking images of the outside of the vehicle. Thus, the mask layer 110 is provided with an imaging window (information acquisition region) 113 at a position corresponding to the imaging device 2, and the imaging device 2 arranged inside the vehicle can take images of the outside of the vehicle via the imaging window 113. Also, an antifog sheet 7 is attached to the imaging window 113.

Also, an image processing device 3 is connected to the imaging device 2, and images taken by the imaging device 2 are processed by the image processing device 3. The imaging device 2 and the image processing device 3 constitute an in-vehicle system 5, and the in-vehicle system 5 can provide various pieces of information to a passenger according to processing performed by the image processing device 3. Hereinafter, constituent elements will be described.

### 1. Laminated glass

FIG. 3 is a cross-sectional view of a laminated glass. As shown in FIG. 3, this laminated glass 10 includes an outer glass plate 11 and an inner glass plate 12, and a resin interlayer 13 is arranged between the glass plates 11 and 12. Hereinafter, the configuration thereof will be described.

### 1-1. Glass plate

First, the outer glass plate 11 and the inner glass plate 12 will be described. Known glass plates can be used as the outer glass plate 11 and the inner glass plate 12, and these glass plates can also be made of heat-ray absorbing glass, regular clear glass or green glass, or UV green glass . However, the glass plates 11 and 12 are required to attain a visible light transmittance that conforms to the safety standards of a country in which the automobile is to be used. An adjustment can be made so that the outer glass plate 11 ensures a required solar absorptance and the inner glass plate 12 provides a visible light transmittance that meets the safety standards, for example. An example of clear glass, an example of heat-ray absorbing glass, and an example of soda-lime based glass are shown below.

### Clear glass

SiO₂: 70 to 73 mass%
Al₂O₃: 0.6 to 2.4 mass%
CaO: 7 to 12 mass%
MgO: 1.0 to 4.5 mass%
R₂O: 13 to 15 mass% (R represents an alkali metal)
Total iron oxide (T-Fe₂O₃) in terms of Fe₂O₃: 0.08 to 0.14 mass%

### Heat-ray absorbing glass

With regard to the composition of heat-ray absorbing glass, a composition obtained based on the composition of clear glass by setting the ratio of the total iron oxide (T-Fe₂O₃) in terms of Fe₂O₃ to 0.4 to 1.3 mass%, the ratio of CeO₂ to 0 to 2 mass%, and the ratio of TiO₂ to 0 to 0.5 mass%, and reducing the components (mainly SiO₂ and Al₂O₃) forming the framework of glass by an amount corresponding to the increases in T-Fe₂O₃, CeO₂, and TiO₂ can be used, for example.

### Soda-lime based glass

SiO₂: 65 to 80 mass%
Al₂O₃: 0 to 5 mass%
CaO: 5 to 15 mass%
MgO: 2 mass% or more
NaO: 10 to 18 mass%
K₂O: 0 to 5 mass%
MgO+CaO: 5 to 15 mass%
Na₂O+K₂O: 10 to 20 mass%
SO₃: 0.05 to 0.3 mass%
B₂O₃: 0 to 5 mass%
Total iron oxide (T-Fe₂O₃) in terms of Fe₂O₃: 0.02 to 0.03 mass%

Although there is no particular limitation on the thickness of the laminated glass according to this embodiment, it is possible to set the total thickness of the outer glass plate 11 and the inner glass plate 12 to 2.1 to 6 mm, for example, and, from the viewpoint of weight reduction, the total thickness of the outer glass plate 11 and the inner glass plate 12 is preferably set to 2.4 to 3.8 mm, more preferably 2.6 to 3.4 mm, and particularly preferably 2.7 to 3.2 mm. As described above, there is a need to reduce the total thickness of the outer glass plate 11 and the inner glass plate 12 in order to reduce the weight. Therefore, although there is no particular limitation on the thicknesses of the glass plates, the thicknesses of the outer glass plate 11 and the inner glass plate 12 can be determined as described below, for example.

The outer glass plate 11 is mainly required to have durability and impact resistance against external interference. When this laminated glass is used as a wind shield of an automobile, for example, the impact-resistance performance with respect to flying objects such as small stones is required. On the other hand, a larger thickness is not preferable because the weight increases. From this viewpoint, the thickness of the outer glass plate 11 is preferably 1.8 to 2.3 mm, and more preferably 1.9 to 2.1 mm. The thickness to be used can be determined in accordance with the application of the glass plate.

Although the thickness of the inner glass plate 12 can be made equal to that of the outer glass plate 11, the thickness of the inner glass plate 12 can be made smaller than that of the outer glass plate 11 in order to reduce the weight of the laminated glass, for example. Specifically, when the strength of the glass plate is taken into consideration, the thickness is preferably 0.6 to 2.0 mm, more preferably 0.8 to 1.6 mm, and particularly preferably 1.0 to 1.4 mm. Furthermore, the thickness is preferably 0.8 to 1.3 mm. With regard to the inner glass plate 12 as well, the thickness to be used can be determined in accordance with the application of the glass plate.

Here, an example of a method of measuring the thickness of a curved glass plate (laminated glass) 1 will be described. First, with respect to the measurement position, the measurement is performed at two positions : an upper position and a lower position on a center line S extending vertically through the center of a glass plate in the horizontal direction. Although there is no particular limitation on the measuring apparatus, a thickness gauge such as SM-112 manufactured by TECLOCK Corporation can be used, for example. During measurement, the glass plate is arranged such that the curved surface of the glass plate is placed on a flat surface, and an end portion of the glass plate is sandwiched by and measured with the above-mentioned thickness gauge. Note that a flat glass plate can also be measured in the same manner as a curved glass plate.

### 1-2. Interlayer

The interlayer 13 includes at least one layer. For example, as shown in FIG. 3, the interlayer 13 can be configured by three layers, namely a soft core layer 131 and outer layers 132 that are harder than the core layer 131 and between which the core layer 131 is sandwiched. However, there is no limitation to this configuration, and it is sufficient that the interlayer 13 includes a plurality of layers including the core layer 131 and at least one outer layer 132 arranged on the outer glass plate 11 side. For example, the interlayer 13 including two layers, namely the core layer 131 and one outer layer 132 arranged on the outer glass plate 11 side, or the interlayer 13 in which an even number of two or more of the outer layers 132 are arranged on each side of the core layer 131 so that the core layer 131 is arranged at the center, or the interlayer 13 in which an odd number of outer layers 132 are arranged on one side of the core layer 131 and an even number of outer layers 132 are arranged on the other side so that the core layer 131 is sandwiched therebetween can also be formed. Note that in the case where only one outer layer 132 is provided, the outer layer 132 is provided on the outer glass plate 11 side as mentioned above, which is for the purpose of improving the breakage resistance performance with respect to an external force from the outside of a vehicle or a building. Also, when the number of outer layers 132 is increased, the sound insulation performance is improved.

There is no particular limitation on the hardness of the core layer 131 as long as the core layer 131 is softer than the outer layer 132. Although there is no particular limitation on the materials constituting the layers 131 and 132, it is possible to select materials based on the Young's modulus, for example. Specifically, at a frequency of 100 Hz and a temperature of 20°C, the Young's modulus is preferably 1 to 20 MPa, more preferably 1 to 18 MPa, and particularly preferably 1 to 14 MPa. When the Young's modulus is set to be in such a range, it is possible to prevent a decrease in STL in a low frequency range of about 3500 Hz or lower. On the other hand, as will be described later, it is preferable that the outer layers 132 have a large Young's modulus for the purpose of improving the sound insulation performance in a high frequency range, and the Young's modulus can be set to 560 MPa or more, 600 MPa or more, 650 MPa or more, 700 MPa or more, 750 MPa or more, 880 MPa or more, or 1300 MPa or more at a frequency of 100 Hz and a temperature of 20°C. Meanwhile, there is no particular limitation on the upper limit of the Young's modulus of each of the outer layers 132, but the Young's modulus can be set from the viewpoint of workability, for example. It is empirically known that when the Young's modulus is set to 1750 MPa or more, for example, the workability decreases, and in particular, cutting is difficult.

Also, the outer layers 132 can be made of a polyvinyl butyral resin (PVB) as a specific material, for example. Polyvinyl butyral resin has excellent adhesiveness to the glass plates and penetration resistance and is thus preferable. On the other hand, the core layer 131 can be made of an ethylene vinyl acetate resin (EVA) or a polyvinyl acetal resin, which is softer than the polyvinyl butyral resin constituting the outer layers. When the soft core layer is sandwiched between the outer layers, the sound insulation performance can be significantly improved while keeping adhesiveness and penetration resistance that are equivalent to those of a single-layered resin interlayer.

In general, the hardness of a polyvinyl acetal resin can be controlled by adjusting (a) the degree of polymerization of polyvinyl alcohol, which is the starting material, (b) the degree of acetalization, (c) the type of plasticizer, (d) the ratio of the plasticizer to be added, and the like. Accordingly, a hard polyvinyl butyral resin that is used for the outer layers 132 and a soft polyvinyl butyral resin that is used for the core layer 131 can be produced with the same polyvinyl butyral resin by appropriately adjusting at least one condition selected from the aforementioned conditions. Furthermore, the hardness of a polyvinyl acetal resin can be controlled based on the type of aldehyde that is used for acetalization and whether co-acetalization using a plurality of kinds of aldehydes or pure acetalization using a single kind of aldehyde is performed. Although not necessarily applicable to every case, the larger the number of carbon atoms of the aldehyde that is used to obtain a polyvinyl acetal resin, the softer the resulting polyvinyl acetal resin tends to be. Accordingly, for example, if the outer layers 132 are made of a polyvinyl butyral resin, a polyvinyl acetal resin that is obtained by acetalizing an aldehyde having 5 or more carbon atoms (e.g., n-hexyl aldehyde, 2-ethylbutyl aldehyde, n-heptyl aldehyde, or n-octyl aldehyde) with polyvinyl alcohol can be used for the core layer 131. Note that there is no limitation to the above-mentioned resins and the like as long as predetermined Young's moduli can be obtained.

The total thickness of the interlayer 13 is not particularly specified, but is preferably 0.3 to 6.0 mm, more preferably 0.5 to 4.0 mm, and particularly preferably 0.6 to 2.0 mm. Also, the thickness of the core layer 131 is preferably 0.1 to 2.0 mm and more preferably 0.1 to 0.6 mm. Meanwhile, the thickness of each of the outer layers 132 is preferably 0.1 to 2.0 mm and more preferably 0.1 to 1.0 mm. Alternatively, it is also possible to fix the total thickness of the interlayer 13 and adjust the thickness of the core layer 131 without exceeding the fixed total thickness.

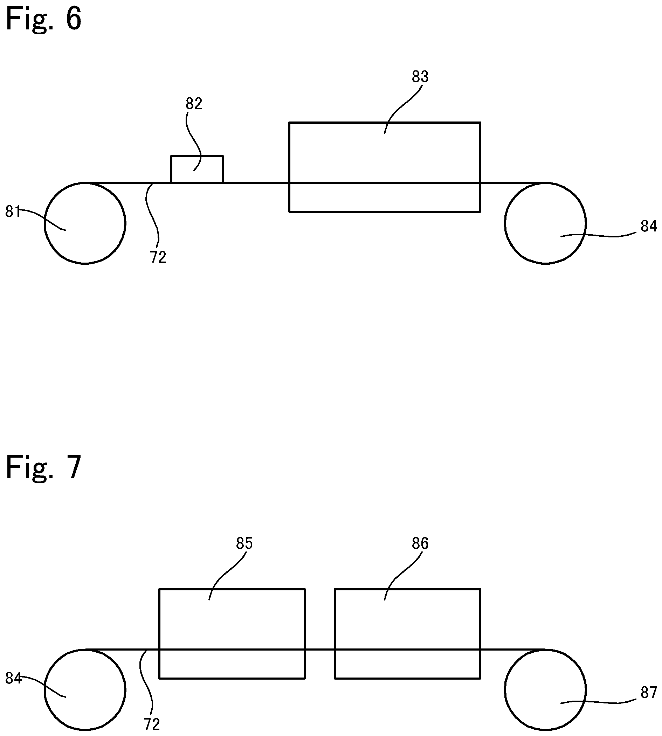

The thicknesses of the core layer 131 and the outer layers 132 can be measured as described below, for example. First, the cross section of a laminated glass is enlarged by a factor of 175 and displayed using a microscope (e.g., VH-5500 manufactured by Keyence Corporation). Then, the thicknesses of the core layer 131 and the outer layers 132 are visually identified and measured. At this time, in order to eliminate variations seen in visual identification, the measurement is performed five times, and average values are taken as the thicknesses of the core layer 131 and the outer layers 132. For example, an enlarged photograph of a laminated glass as shown in FIG. 7 is taken, in which the core layer and the outer layers 132 have been identified, and the thicknesses of the identified core layer and outer layers 132 are measured.

Note that the core layer 131 and the outer layers 132 of the interlayer 13 are not required to have a constant thickness over the entire surface. For example, the core layer 131 and the outer layers 132 can also have a wedge shape so as to be suited to a laminated glass that is used for a head-up display. In this case, the thicknesses of the core layer 131 and the outer layers 132 of the interlayer 13 are measured at positions having the smallest thickness, that is, in the lowest side portion of the laminated glass. If the interlayer 13 has a wedge shape, the outer glass plate and the inner glass plate are not arranged in parallel, but it should be construed that such an arrangement is also included in the arrangement of the glass plates of the present invention. That is, the arrangement according to the present invention includes the arrangement of the outer glass plate and the inner glass plate when the interlayer 13 including the core layer 131 and the outer layers 132 whose thicknesses increase at a rate of change of 3 mm or less per meter is used, for example.

Although there is no particular limitation on the method of manufacturing the interlayer 13, examples thereof include a method in which a resin component, such as the above-described polyvinyl acetal resin, a plasticizer, and other additives, if necessary, are mixed and uniformly kneaded, and then the layers are collectively extruded, and a method in which two or more resin films that are produced using this method are laminated with a pressing process, a lamination process, or the like. In the method of laminating with the pressing process, the lamination process, or the like, each of the resin films before laminating may have a single-layer structure or a multilayer structure. Also, the interlayer 13 may include a single layer instead of the plurality of layers as mentioned above.

### 2. Mask layer

Next, the mask layer 110 will be described. As shown in FIGS. 1 and 2, in this embodiment, the mask layer 110 is layered on an inner surface (an inner surface of the inner glass plate 12) 130 on the vehicle interior side of the laminated glass 10, and is formed along a peripheral edge portion of the laminated glass 10. Specifically, as shown in FIG. 1, the mask layer 110 according to this embodiment includes a peripheral edge region 111 extending along the peripheral edge portion of the laminated glass 10, and a protruding region 112 that protrudes downward from the upper side of the laminated glass 10 in a rectangular shape. The peripheral edge region 111 blocks light entering from the peripheral edge portion of the wind shield. On the other hand, the protruding region 112 conceals the imaging device 2 arranged on the inner side of the vehicle from the outside of the vehicle.

However, if the mask layer 110 blocks the imaging range of the imaging device 2, the imaging device 2 cannot take images of situation forward of the vehicle exterior. Thus, in this embodiment, the protruding region 112 of the mask layer 110 is provided with a rectangular imaging window 113 at a position corresponding to the imaging device 2 such that the imaging device 2 can take images of the outside of the vehicle. That is to say, the imaging window 113 is provided independently of a non-blocking region 120 on the inner side in the in-plane direction with respect to the mask layer 110. Also, this imaging window 113 is a region where the material of the mask layer 110 is not layered, and thus it is possible to take images of the outside of the vehicle due to the laminated glass having the above-described transmittance of visible light.

As described above, the mask layer 110 can also be layered on the inner surface of the outer glass plate 11, or the outer surface of the inner glass plate 12, in addition to being laminated on the inner surface of the inner glass plate 12, for example. Also, the mask layer 110 can be layered at two positions of the inner surface of the outer glass plate 11 and the inner surface of the inner glass plate 12.

Next, the material of the mask layer 110 will be described. The material of the mask layer 110 may be selected as appropriate according to embodiments as long as it can block the field of view from the outside of the vehicle, and a ceramic material with a dark color such as black, brown, gray, or dark blue may be used, for example.

If a black ceramic material is selected as the material of the mask layer 110, for example, the black ceramic material is layered on the peripheral edge portion of the inner surface 130 of the inner glass plate 12 through screen printing or the like, and the layered ceramic materials are heated together with the inner glass plate 12. Accordingly, it is possible to form the mask layer 110 on the peripheral edge portion of the inner glass plate 12. Also, when a black ceramic material is printed, a region where the black ceramic material is not partially printed is provided. Accordingly, it is possible to form the imaging window 113. Note that various materials can be used as the ceramic material used for the mask layer 110. It is possible to use a ceramic material with a composition shown in Table 1 below for the mask layer 110, for example.

**Table 1**

| | | First and second color ceramic paste |
|---|---|---|
| Pigment^{*}1 | mass% | 10 |
| Resin (cellulosic resin) | mass% | 10 |
| Organic solvent (pine oil) | mass% | 10 |
| Glass binder^{*}2 | mass% | 70 |
| Viscosity | dPs | 150 |

| | | |
|---|---|---|
| ^{*}1, main components: copper oxide, chromium oxide, iron oxide, and manganese oxide ^{*}2, main components: bismuth borosilicate and zinc borosilicate | | |

### 3. In-vehicle system

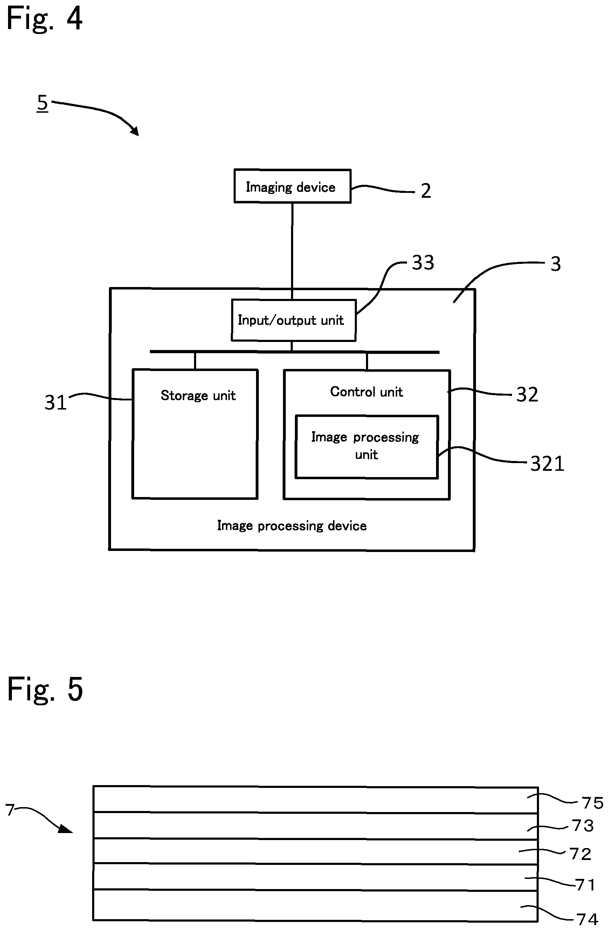

Next, an in-vehicle system 5 provided with the imaging device 2 and the image processing device 3 will be described using FIG. 4. FIG. 4 shows the configuration of the in-vehicle system 5. As shown in FIG. 4, the in-vehicle system 5 according to this embodiment includes the above-described imaging device 2 and the above-described image processing device 3 connected to the imaging device 2.

The image processing device 3 is a device for processing images taken by the imaging device 2. This image processing device 3 includes general hardware such as a storage unit 31, a control unit 32, and an input/output unit 33 that are connected via a busbar, as a hardware configuration, for example. However, the hardware configuration of the image processing device 3 is not limited to such an example, and, with regard to a specific hardware configuration of the image processing device 3, it is possible to add, or omit and add constituent elements as appropriate according to an embodiment.

The storage unit 31 stores various data and programs used in processing executed by the control unit 32 (not shown) . The storage unit 31 may be realized by a hard disk, or a recording medium such as a USB memory, for example. Also, various data and programs stored in the storage unit 31 may be acquired from a recording medium such as a CD (Compact Disc) or a DVD (Digital Versatile Disc). Furthermore, the storage unit 31 may be referred to as an "auxiliary storage".

As described above, the laminated glass 10 is arranged in an inclined orientation with respect to the vertical direction, and is curved. Also, the imaging device 2 takes images of the outside of a vehicle via such a laminated glass 10. Thus, the images taken by the imaging device 2 are deformed according to the orientation, shape, refractive index, optical defects, and the like of the laminated glass 10. Aberrations that are specific to the camera lens of the imaging device 2 also cause deformation. In view of this, the storage unit 31 may store correction data for correcting images that are deformed due to aberrations of the laminated glass 10 and the camera lens.

The control unit 32 includes one or more processors such as a microprocessor or a CPU (Central Processing Unit), and peripheral circuits (a ROM (Read Only Memory) , a RAM (Random Access Memory), an interface circuit, and the like) used for processing performed by these processors. The ROM, the RAM, and the like may be called the main storages in the sense that they are located in the address space handled by the processors in the control unit 32. The control unit 32 functions as an image processing unit 321 by executing various data and programs stored in the storage unit 31.

The image processing unit 321 processes images taken by the imaging device 2. Processing performed on the captured images can be selected as appropriate according to an embodiment. The image processing unit 321 may recognize a subject present in a captured image by analyzing the captured image through pattern matching or the like, for example. In this embodiment, in order that the imaging device 2 takes images of situation forward of the vehicle, the image processing unit 321 may further determine whether or not an organism such as a human being is present on the forward side of the vehicle based on this subject recognition. Then, if a person is present on the forward side of the vehicle, the image processing unit 321 may output a warning message, using a predetermined method. Also, the image processing unit 321 may perform a predetermined process on a captured image, for example. Then, the image processing unit 321 may output the processed captured image to a display device (not shown) such as a display connected to the image processing device 3.

The input/output unit 33 is one or more interfaces for transmitting and receiving data to/from a device that is present outside the image processing device 3. The input/output unit 33 is an interface for connecting to a user interface, or an interface of a USB (Universal Serial Bus), for example. Note that the image processing device 3 is connected to the imaging device 2 via the input/output unit 33, and acquires images taken by the imaging device 2 in this embodiment.

In addition to a device designed exclusively for a service to be provided, a general-purpose device such as a PC (Personal Computer) or a tablet terminal may be used as such an image processing device 3.

Also, the above-described information acquisition device is attached to a bracket (not shown), and the bracket is attached to the mask layer. Therefore, attachment of the information acquisition device to the bracket and attachment of the bracket to the mask layer are adjusted such that the optical axis of the camera of the information acquisition device passes through the imaging window 113 in this state. Also, a cover (not shown) is attached to the bracket to cover the imaging device 2. Thus, the imaging device 2 is arranged in the space surrounded by the laminated glass 10, the bracket, and the cover, and the imaging device 2 cannot be seen from the vehicle interior side, and only a portion of the imaging device 2 can be seen from the vehicle exterior side through the imaging window 113. Also, the imaging device 2 and the above-described input/output unit 33 are connected to each other by a cable (not shown) , and this cable is drawn out from the cover and is connected to the image processing device 3 arranged at a predetermined position in the vehicle.

### 4. Antifog sheet

Next, an antifog sheet will be described. As described above, the antifog sheet is attached to the imaging window 113, and as shown in FIG. 5, an adhesive layer 71, a base film 72, and an antifog layer (antifog film) 73 are layered in the stated order until the antifog sheet is fixed to the imaging window 113. Also, a separable first protective sheet 74 is attached to the adhesive layer 71, a separable second protective sheet 75 is also attached to the antifog layer 73, and an antifog laminate is constituted by these five layers. Although this antifog sheet 7 is formed into a shape corresponding to the imaging window 113, the antifog sheet 7 can be formed into a shape that is slightly smaller than the imaging window 113, for example. Alternatively, the antifog sheet 7 can also be formed to be larger than the imaging window 113 and exceed the imaging window 113 to cover a portion of the mask layer 110. Hereinafter, each layer will be described.

### 4-1. Antifog layer

There is no particular limitation on antifog layers as long as the antifog effect of the laminated glass plate 10 is achieved, and known antifog layers can be used. In general, the types of antifog layer include a hydrophilic type that turns water generated from water vapor into a water layer on its surface, a water absorbent type that absorbs water vapor, a water-repellent and water absorbent type that suppresses the condensation of waterdrops on the surface thereof, and a water repellent type that repels waterdrops generated from water vapor, and any types of antifog layer can be used. The following describes an example of a water-repellent and water absorbent antifog layer as an example thereof. Organic-inorganic composite antifog layer

An organic-inorganic composite antifog layer is a single-layer film or a laminated multi-layer film formed on a surface of a base film. The organic-inorganic composite antifog layer contains at least a water absorbent resin, a water repellent group, and a metallic oxide component. The antifog film may further contain other functional components as needed. There is no limitation on the type of water absorbent resin as long as a resin that can absorb and hold water is used. The antifog film can be supplied with a water repellent group using a metallic compound containing a water repellent group (water repellent group-containing metallic compound). The antifog film can be supplied with a metallic oxide component using a metallic compound other than the water repellent group-containing metallic compound, minute particles of a metallic oxide, or the like. Hereinafter, these components will be described.

### Water absorbent resin

There is no particular limitation on the water absorbent resin, and examples thereof include polyethylene glycol, polyether resin, polyurethane resin, starch-based resin, cellulosic resin, acrylic resin, epoxy resin, polyester polyol, hydroxyalkyl cellulose, polyvinyl alcohol, polyvinyl pyrrolidone, polyvinyl acetal resin, and polyvinyl acetate. In particular, hydroxyalkyl cellulose, polyvinyl alcohol, polyvinyl pyrrolidone, polyvinyl acetal resin, polyvinyl acetate, epoxy resin, and polyurethane resin are preferable, and polyvinyl acetal resin, epoxy resin, and polyurethane resin are more preferable, and polyvinyl acetal resin is particularly preferable.

Polyvinyl acetal resin can be obtained through acetalization of a product obtained through a condensation reaction of polyvinyl alcohol with an aldehyde. The acetalization of polyvinyl alcohol may be carried out using a known method such as a precipitation method in which an aqueous medium is used in the presence of an acid catalyst, or a dissolution method in which a solvent such as alcohol is used. Acetalization can also be carried out in parallel with saponification of polyvinyl acetate. The degree of acetalization is preferably 2 to 40 mol%, more preferably 3 to 30 mol%, particularly preferably 5 to 20 mol%, and preferably 5 to 15 mol% if necessary. The degree of acetalization can be measured based on ¹³C nuclear magnetic resonance spectroscopy, for example. A polyvinyl acetal resin having a degree of acetalization in the above-described range is suitable for forming an organic-inorganic composite antifog layer having favorable water absorbing properties and water resistance.

The average degree of polymerization of polyvinyl alcohol is preferably 200 to 4500, and more preferably 500 to 4500. A high average degree of polymerization is advantageous in the formation of an organic-inorganic composite antifog layer having favorable water absorbing properties and water resistance, but if the average degree of polymerization is excessively high, the viscosity of the solution will be excessively high, and the formation of a film may be negatively affected. The degree of saponification of the polyvinyl alcohol is preferably 75 to 99.8 mol%.

Examples of the aldehyde condensed with polyvinyl alcohol through a condensation reaction include aliphatic aldehydes such as formaldehyde, acetaldehyde, butyraldehyde, hexylcarbaldehyde, octylcarbaldehyde, and decylcarbaldehyde. Examples thereof also include aromatic aldehydes including benzaldehyde; benzaldehyde subjected to substitution using an alkyl group such as 2-methylbenzaldehyde, 3-methylbenzaldehyde, 4-methylbenzaldehyde, or the like; benzaldehyde subjected to substitution using a halogen atom such as chlorobenzaldehyde or the like; substituted benzaldehyde in which a hydrogen atom is substituted with a functional group such as a hydroxy group, an alkoxy group, an amino group, or a cyano group, other than alkyl groups; and a condensed aromatic aldehyde such as naphtaldehyde or anthraldehyde. Aromatic aldehydes, which are highly hydrophobic, are advantageous in the formation of an organic-inorganic composite antifog layer with a low degree of acetalization and excellent water resistance. Use of aromatic aldehydes is also advantageous in that a film having high water absorbing properties is formed while a large number of hydroxy groups are kept. It is preferable that the polyvinyl acetal resin has an acetal structure derived from an aromatic aldehyde, particularly benzaldehyde.

Examples of the epoxy resin include glycidyl ether-based epoxy resin, glycidyl ester-based epoxy resin, glycidyl amine-based epoxy resin, and cyclic aliphatic epoxy resin. In particular, the cyclic aliphatic epoxy resin is preferable.

Examples of the polyurethane resin include polyurethane resins composed of polyisocyanate and polyol. An acrylic polyol and a polyoxyalkylene polyol are preferable as polyols.

The organic-inorganic composite antifog layer contains water absorbent resin as the main component. In the present invention, the "main component" means a component with the highest content on the basis of mass. From the viewpoint of hardness, water absorbing properties, and antifog properties of a film, the content of the water absorbent resin based on the weight of the organic-inorganic composite antifog layer is preferably 50 wt% or more, more preferably 60 wt% or more, and particularly preferably 65 wt% or more, and preferably 95 wt% or less, and more preferably 90 wt% or less.

### Water repellent group

It is preferable to use a water repellent group, which has high water repellency, in order to sufficiently obtain the above-described effect of the water repellent group. A preferable water repellent group is at least one type selected from (1) chain or cyclic alkyl groups having 3 to 30 carbon atoms and (2) chain or cyclic alkyl groups having 1 to 30 carbon atoms in which at least a portion of hydrogen atoms are substituted with a fluorine atom (also referred to as "fluorine-substituted alkyl groups" hereinafter).

The chain or cyclic alkyl groups in (1) and (2) are preferably chain alkyl groups. The chain alkyl groups may be branched alkyl groups, but are preferably linear alkyl groups. Alkyl groups having more than 30 carbon atoms may lead to an antifog film being opaque. The number of carbon atoms in the alkyl groups is preferably 20 or less, and more preferably 6 to 14 from the viewpoint of balance between the antifog properties, strength, and external appearance of the film. Particularly preferable alkyl groups are linear alkyl groups having 6 to 14 carbon atoms, in particularly, linear alkyl groups having 6 to 12 carbon atoms, such as an n-hexyl group (6 carbon atoms), an n-decyl group (10 carbon atoms), and an n-dodecyl group (12 carbon atoms). The fluorine-substituted alkyl groups in (2) may be groups obtained by substituting only a portion of hydrogen atoms of a chain or a cyclic alkyl group with a fluorine atom, or groups obtained by substituting all of the hydrogen atoms of a chain or a cyclic alkyl group with a fluorine atom, such as linear perfluoroalkyl groups. The fluorine-substituted alkyl groups have high water repellency, and therefore, the effects can be sufficiently obtained by adding a small amount thereof. Note that, when the content of the fluorine-substituted alkyl groups is excessively large, a component containing the fluorine-substituted alkyl groups may be separated from the other components in a coating solution for forming a film.

### Hydrolyzable metallic compound containing water repellent group

In order to blend the water repellent groups into the antifog film, it is sufficient that a metallic compound containing a water repellent group (water repellent group-containing metallic compound), particularly a metallic compound (water repellent group-containing hydrolyzable metallic compound) containing a water repellent group and a hydrolyzable functional group or a halogen atom, or a hydrolysate thereof is added to a coating solution for forming a film. In other words, the water repellent group may be derived from the water repellent group-containing hydrolyzable metallic compound. A water repellent group-containing hydrolyzable silicon compound represented by Formula (I) below is favorably used as the water repellent group-containing hydrolyzable silicon compound.

RₘSiY₄₋ₘ (I)

Here, R represents a water repellent group, that is, a chain or cyclic alkyl group having 1 to 30 carbon atoms in which at least a portion of hydrogen atoms is optionally substituted with a fluorine atom, and Y represents a hydrolyzable functional group or a halogen atom, and m represents an integer of 1 to 3. The hydrolyzable functional group is at least one type selected from an alkoxyl group, an acetoxy group, an alkenyloxy group, and an amino group, and preferably an alkoxy group, particularly an alkoxy group having 1 to 4 carbon atoms. An example of the alkenyloxy group is an isopropenoxy group. The halogen atom is preferably a chlorine atom. Note that the functional groups shown here as examples can also be used as "hydrolyzable functional groups" described hereinafter. m is preferably 1 or 2.

When the progress of hydrolysis and polycondensation is completed, the compound represented by Formula (I) supplies a component represented by Formula (II) below.

RₘSiO _{(4-m)/2} (II)

Here, R and m are as described above. In practice, after the hydrolysis and polycondensation have been performed, the compounds represented by Formula (II) form a network structure in which silicon atoms are linked to one another via oxygen atoms, in the antifog film.

As described above, the compounds represented by Formula (I) are hydrolyzed or partially hydrolyzed, and at least portions thereof are polycondensed. Thus, a network structure including siloxane bonds (Si-O-Si) is formed in which silicon atoms and oxygen atoms are alternately linked and that spreads out three-dimensionally. A water repellent group R is linked to the silicon atom contained in this network structure. In other words, the water repellent group R is immobilized in the network structure including siloxane bonds via an R-Si bond. This structure is advantageous in uniform dispersion of the water repellent groups R in the film. The network structure may contain silica components supplied from silicon compounds (e.g., tetraalkoxysilane and silane coupling agents) other than the water repellent group-containing hydrolyzable silicon compound represented by Formula (I). If a silicon compound that does not contain a water repellent group and contains a hydrolyzable functional group or halogen atom (water repellent group-free hydrolyzable silicon compound) is blended together with the water repellent group-containing hydrolyzable silicon compound in a coating solution for forming an antifog film, a network structure including siloxane bonds containing silicon atoms that are linked to water repellent groups and silicon atoms that are not linked to water repellent groups can be formed. With such a structure, it is easy to independently adjust the content of the water repellent group and the content of the metallic oxide component in the antifog film.

The water repellent groups have the effect of enhancing the antifog performance by enhancing water vapor permeability of the surface of the antifog film containing a water absorbent resin. The two functions, namely the water absorbent function and the water repellent function, are contrary to each other, and therefore, conventionally, a water absorbent material and a water repellent material are distributed in separate layers. However, the maldistribution of water near the surface of the antifog layer is resolved due to the water repellent groups, so that the time it takes for dew to condense is prolonged, and the antifog properties of the antifog film having a single-layer structure are thus enhanced. The following is a description of the effects.

Water vapor that has infiltrated the antifog film containing the water absorbent resin forms hydrogen bonds with the hydroxy groups in the water absorbent resin and the like, and is retained in the form of bound water. As the amount of water vapor increases, the form of water vapor changes from bound water to semibound water, and finally, water vapor is retained in the form of free water retained in voids in the antifog film. The water repellent groups prevent the formation of hydrogen bonds and facilitate the dissociation of formed hydrogen bonds in the antifog film. If the content of the water absorbent resin is the same, the number of hydroxy groups capable of forming a hydrogen bond in the film is the same, but the speed of hydrogen bond formation is reduced due to the water repellent groups. Therefore, if the antifog film containing the water repellent groups is used, moisture will ultimately be retained in any of the above-mentioned forms in the antifog film, but water vapor can diffuse to the bottom portion of the film as it is until it is retained therein. Furthermore, water that is once retained dissociates relatively easily and is likely to move to the bottom portion of the film in the form of water vapor. As a result, the distribution of the retained amount of moisture in the thickness direction of the film is relatively uniform between the vicinity of the surface and the bottom portion of the film. That is, the entirety in the thickness direction of the antifog film can be effectively used to absorb water supplied to the surface of the film, and therefore, waterdrops are less likely to be formed on the surface thereof through condensation, thus resulting in the enhancement of antifog properties. Also, the antifog film that has absorbed moisture due to waterdrops being less likely to form on the surface thereof through condensation is less likely to freeze even in low temperatures. Therefore, when the antifog film is fixed to the imaging window 113, it is possible to secure the field of view of the imaging window 113 in a wide temperature range.

On the other hand, with an antifog film that does not contain the water repellent groups, water vapor that has infiltrated the film is retained significantly easily in the form of bound water, semibound water, or free water. Therefore, water vapor that has infiltrated the antifog film tends to be retained in the vicinity of the surface of the film. As a result, in the film, the amount of moisture is extremely large in the vicinity of the surface, and rapidly decreases toward the bottom portion of the film. That is, although the bottom portion of the film can further absorb water, the vicinity of the surface of the film is saturated with moisture and the moisture condenses into waterdrops, and therefore, the antifog properties are limited.

When the water repellent groups are introduced into the antifog film using the water repellent group-containing hydrolyzable silicon compound (see Formula (I)), a network structure including stable siloxane bonds (Si-O-Si) is formed. The formation of this network structure is advantageous from the viewpoint that not only abrasion resistance but also hardness, water resistance, and the like are enhanced.

It is sufficient that the water repellent groups are added in an amount with which the contact angle of water on the surface of the antifog film is 70 degrees or more, preferably 80 degrees or more, and more preferably 90 degrees or more. A measurement value obtained from a 4 mg waterdrop dropped onto the surface of the film is taken as the contact angle of water. In particular, when a methyl group or ethyl group, which has slightly low water repellency, is used as the water repellent group, it is preferable to blend, into the antifog film, the repellent groups in an amount with which the contact angle of water is within the above-mentioned range. The upper limit of the contact angle of this waterdrop is not particularly limited, but is 150 degrees or less, 120 degrees or less, or 100 degrees or less, for example. It is preferable that the water repellent groups are uniformly contained in the antifog film such that the contact angles of waterdrops are within the above-mentioned range over the entire region of the surface of the antifog film.

It is preferable that the antifog film contains the water repellent groups such that the amount of water repellent groups is within a range of 0.05 parts by mass or more, preferably within a range of 0.1 parts by mass or more, and more preferably within a range of 0.3 parts by mass or more, and within a range of 10 parts by mass or less and preferably within a range of 5 parts by mass or less, with respect to 100 parts by mass of the water absorbent resin.

### Inorganic oxide

The inorganic oxide is an oxide of at least one type of element selected from Si, Ti, Zr, Ta, Nb, Nd, La, Ce, and Sn, for example, and preferably includes an oxide of Si (silica). It is preferable that the organic-inorganic composite antifog layer contains the inorganic oxide such that the amount of the inorganic oxide is preferably 0.01 parts by weight or more, more preferably 0.1 parts by weight or more, further preferably 0.2 parts by weight or more, particularly preferably 1 part by weight or more, most preferably 5 parts by weight or more, and 10 parts by weight or more, and 20 parts by weight or more if necessary, and preferably 50 parts by weight or less, more preferably 45 parts by weight or less, further preferably 40 parts by weight or less, particularly preferably 35 parts by weight or less, most preferably 33 parts by weight or less, and 30 parts by weight or less if necessary, with respect to 100 parts by weight of the water absorbent resin. The inorganic oxide is a necessary component for ensuring the strength of the organic-inorganic composite antifog layer, particularly abrasion resistance, but if the content of the inorganic oxide is excessively large, the antifog properties of the organic-inorganic composite antifog layer are impaired.

### Minute particles of inorganic oxide

The organic-inorganic composite antifog layer may further contain minute particles of an inorganic oxide as at least a portion of the inorganic oxide. An inorganic oxide constituting the minute particles of the inorganic oxide is an oxide of at least one type of element selected from Si, Ti, Zr, Ta, Nb, Nd, La, Ce, and Sn, for example, and minute particles of silica are preferable. The minute particles of silica can be introduced into the organic-inorganic composite antifog layer by adding colloidal silica thereto, for example. The minute particles of an inorganic oxide excel at transmitting stress applied to the organic-inorganic composite antifog layer to an article that supports the organic-inorganic composite antifog layer, and have high hardness. Therefore, the addition of the minute particles of an inorganic oxide is advantageous from the viewpoint that the abrasion resistance of the organic-inorganic composite antifog layer is enhanced. Also, when the minute particles of an inorganic oxide are added to the organic-inorganic composite antifog layer, minute voids are formed in portions where the minute particles are in contact with one another or close to one another, and water vapor is likely to be introduced into the film through these voids. Accordingly, the addition of minute particles of an inorganic oxide may advantageously act to enhance the antifog properties. Minute particles of an inorganic oxide that have been formed in advance are added to a coating solution for forming an organic-inorganic composite antifog layer, and the minute particles of an inorganic oxide can thus be supplied to the organic-inorganic composite antifog layer.

When the average particle diameter of the minute particles of an inorganic oxide is excessively large, the organic-inorganic composite antifog layer may be opaque, whereas when the average particle diameter of the minute particles of an inorganic oxide is excessively small, the minute particles aggregate, thus making it difficult to uniformly disperse the minute particles. From this viewpoint, the average particle diameter of the minute particles of an inorganic oxide is preferably 1 to 20 nm, and more preferably 5 to 20 nm. Note that the average particle diameter of the minute particles of an inorganic oxide in the form of primary particles is taken as the average particle diameter of the minute particles of an inorganic oxide described herein. The average particle diameter of the minute particles of an inorganic oxide is determined by measuring, through observation using a scanning electron microscope, the particle diameters of fifty randomly selected minute particles and employing the average value thereof. If the content of the minute particles of an inorganic oxide is excessively large, there is a risk that the amount of water absorption will decrease in the entire organic-inorganic composite antifog layer, and thus the organic-inorganic composite antifog layer will become opaque. It is preferable to add the minute particles of an inorganic oxide such that the amount thereof is preferably 0 to 50 parts by weight, more preferably 2 to 30 parts by weight, further preferably 5 to 25 parts by weight, and particularly preferably 10 to 20 parts by weight with respect to 100 parts by weight of the water absorbent resin.

### Hydrolyzable metallic compound containing no water repellent groups

The antifog film may contain a metallic oxide component derived from a hydrolyzable metallic compound that does not contain a water repellent group (water repellent group-free hydrolyzable compound). A preferable water repellent group-free hydrolyzable metallic compound is a hydrolyzable silicon compound that does not contain a water repellent group. The hydrolyzable silicon compound that does not contain a water repellent group is at least one type of silicon compound (note that a water repellent group is not contained) selected from silicon alkoxide, chlorosilane, acetoxysilane, alkenyloxysilane, and aminosilne, and silicon alkoxide that does not contain a water repellent group is preferable. Note that an example of the alkenyloxysilane is isopropenoxysilane.

The hydrolyzable silicon compound that does not contain a water repellent group may be a compound represented by Formula (III) below.

SiY₄ (III)

As described above, Y represents a hydrolyzable functional group, and is preferably at least one selected from an alkoxyl group, an acetoxy group, an alkenyloxy group, an amino group, and a halogen atom.

The water repellent group-free hydrolyzable metallic compounds are hydrolyzed or partially hydrolyzed, and at least portions thereof are polycondensed. Thus, a metallic oxide component in which metallic atoms and oxygen atoms are linked is supplied. This component firmly joins minute particles of a metallic oxide and the water absorbent resin to each other, and may contribute to an increase in the abrasion resistance, hardness, water resistance, and the like of the antifog film. It is preferable to set the amount of metallic oxide component derived from the hydrolyzable metallic compound that does not contain a water repellent group to be within a range of 0 to 40 parts by mass, preferably 0.1 to 30 parts by mass, more preferably 1 to 20 parts by mass, particularly preferably 3 to 10 parts by mass, and 4 to 12 parts by mass if necessary, with respect to 100 parts by mass of the water absorbent resin.

A preferable example of the hydrolyzable silicon compound that does not contain a water repellent group is tetraalkoxysilane, and more specifically, tetraalkoxysilane containing an alkoxy group having 1 to 4 carbon atoms. The tetraalkoxysilane is at least one selected from tetramethoxysilane, tetraethoxysilane, tetra-n-propoxysilane, tetraisopropoxysilane, tetra-n-butoxysilane, tetraisobutoxysilane, tetra-sec-butoxysilane, and tetra-tert-butoxysilane, for example.

If the content of the metallic oxide (silica) component derived from tetraalkoxysilane is excessively large, the antifog properties of the antifog film may be impaired. One reason for this is that the flexibility of the antifog film is impaired, and thus the swelling and shrinkage of the film caused by the absorption and discharge of moisture are limited. It is preferable to add the metallic oxide component derived from tetraalkoxysilane such that the amount thereof is within a range of 0 to 30 parts by mass, preferably 1 to 20 parts by mass, and more preferably 3 to 10 parts by mass, with respect to 100 parts by mass of the water absorbent resin.

Another preferable example of the hydrolyzable silicon compound that does not contain a water repellent group is a silane coupling agent. The silane coupling agent is a silicon compound containing active functional groups that are different from each other. It is preferable that a portion of the active functional groups are hydrolyzable functional groups. An example of the silane coupling agent is a silicon compound containing an epoxy group and/or an amino group and a hydrolyzable functional group. Preferable examples of the silane coupling agent include glycidyloxyalkyltrialkoxysilane and aminoalkyltrialkoxysilane. It is preferable that, in these silane coupling agents, an alkylene group that is directly linked to a silicon atom has 1 to 3 carbon atoms. Because a glycidyloxyalkyl group and an aminoalkyl group contain a hydrophilic functional group (epoxy group, amino group), they are not water-repellent as a whole even though they contain an alkylene group.

The silane coupling agent firmly couples water absorbent resin, which is an organic component, and the minute particles of a metallic oxide and the like, which are inorganic components, and may contribute to the enhancement of the abrasion resistance, hardness, water resistance, and the like of the antifog film. However, when the content of the metallic oxide (silica) component derived from the silane coupling agent is excessively large, the antifog properties of the antifog film are impaired, and the antifog film may be opaque in some cases. It is preferable to add the metallic oxide component derived from the silane coupling agent such that the amount thereof is within a range of 0 to 10 parts by mass, preferably 0.05 to 5 parts by mass, and more preferably 0.1 to 2 parts by mass, with respect to 100 parts by mass of the water absorbent resin.

### Cross-linked structure

The antifog film may also include a cross-linked structure formed using a cross-linking agent, preferably at least one type of cross-linking agent selected from an organic boron compound, an organic titanium compound, and an organic zirconium compound. The introduction of the cross-linked structure enhances the abrasion resistance, scratch resistance, and water resistance of the antifog film. From another viewpoint, the introduction of the cross-linked structure facilitates an improvement in the durability of the antifog film without impairing the antifog properties of the antifog film.

When the cross-linked structure formed using a cross-linking agent is introduced into the antifog film in which the metallic oxide component is a silica component, the antifog film may contain a metallic atom other than silicon, preferably boron, titanium, or zirconium, in addition to silicon, as metallic atoms.

There is no particular limitation on the type of cross-linking agent as long as the used water absorbent resin can be cross-linked. Here, only examples of the organic titanium compound will be listed. The organic titanium compound is at least one selected from a titanium alkoxide, a titanium chelate-based compound, and titanium acylate, for example. Examples of the titanium alkoxide include titanium tetraisopropoxide, titanium tetra-n-butoxide, and titanium tetraoctoxide. Examples of the titanium chelate compound include titanium acetylacetonate, titanium ethyl acetoacetate, titanium octyleneglycol, titanium triethanolamine, and titanium lactate. The titanium lactate may be an ammonium salt thereof (titanium lactate ammonium). An example of the titanium acylate is titanium stearate. A preferable organic titanium compound is a titanium chelate compound, particularly titanium lactate.

When the water absorbent resin is polyvinyl acetal, a preferable cross-linking agent is an organic titanium compound, particularly titanium lactate.

### Other optional components

Other additives may also be blended into the antifog film. Examples of the additives include glycols such as glycerin and ethylene glycol that have the function of improving the antifog properties. A surfactant, a leveling agent, an ultraviolet absorbing agent, a coloring agent, an antifoaming agent, an antiseptic agent, and the like may be used as an additive.

### Film thickness

It is sufficient that the film thicknesses of the organic-inorganic composite antifog layer is adjusted as appropriate according to required antifog properties and the like. The film thickness of the organic-inorganic composite antifog layer is preferably 2 to 20 µm, more preferably 2 to 15 µm, and further preferably 3 to 10 µm.

Note that the above-described antifog layer is an example, and it is possible to use other known antifog layers, and to use various antifog layers such as the antifog layer described in JP 2001-146585A, for example.

### 4-2. Base film

The base film 72 is formed by a transparent resin film, and can be formed of polyethylene terephthalate, polyvinyl chloride, polyvinylidene chloride, polycarbonate, or acrylic resin, for example. Also, the resin may contain an ultraviolet absorbing agent.

Examples of the ultraviolet absorbing agent include organic substances such as benzotriazole compounds (e.g., 2-(2'-hydroxy-5'-methylphenyl)benzotriazole, and 2-(2'-hydroxy-3',5'-di-t-butylphenyl)benzotriazole), benzophenone compounds (e.g., 2,2',4,4'-tetrahydroxybenzophenone,
2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone)) , hydroxyphenyltriazine compounds (e.g., 2-(2-hydroxy-4-octoxyphenyl)-4,6-bis(2,4-di-t-buthylphenyl) -s-triazine,
2-(2-hydroxy-4-methoxyphenyl)-4,6-diphenyl-s-triazine, and 2-(2-hydroxy-4-propoxy-5-methylphenyl)-4,6-bis(2,4-di-t-but ylphenyl)-s-triazine), and cyanoacrylate compounds (e.g., ethyl-α-cyano-β,β-diphenyl acrylate, methyl-2-cyano-3-methyl-3-(p-methoxyphenyl)acrylate). The ultraviolet absorbing agents may be used alone or in combination of two or more types. Also, the ultraviolet absorbing agent may be at least one type of organic pigment selected from polymethine compounds, imidazoline compounds, coumarin compounds, naphthalimide compounds, perylene compounds, azo compounds, isoindolinone compounds, quinophthalone compounds, and quinoline compounds.

Such a base film 72 preferably has a transmittance of 5% or less at a wavelength of 380 nm, and has a transmittance of 50% or less at a wavelength of 400 nm, for example.

Also, the base film 72 needs to have a certain degree of rigidity because the base film 72 supports the antifog layer 73. However, if the thickness thereof is excessively large, Haze ratio is likely to be high. Thus, the base film 72 preferably has a thickness of 30 to 200 µm, for example.

### 4-3. Adhesive layer

As will be described later, the adhesive layer 71 needs only to be capable of fixing the base film 72 to the inner glass plate 12 with sufficient strength. Specifically, it is possible to use an adhesive layer composed of acrylic resin, rubber, or resin that has tackiness, the resin being obtained through copolymerization of a methacrylic monomer and an acrylic monomer, and being set to a desired glass transition temperature, and the like. It is possible to use methyl acrylate, ethyl acrylate, butyl acrylate, stearyl acrylate, diethylhexyl acrylate, and the like as the acrylic monomer, and to use ethyl methacrylate, butyl methacrylate, isobutyl methacrylate, stearyl methacrylate, and the like as the methacrylic monomer. Also, if the adhesive layer is applied through heat lamination or the like, an organic substance that softens at the lamination temperature may be used. When a resin obtained through copolymerization of a methacrylic monomer and an acrylic monomer is used, the glass transition temperature can be adjusted by changing the ratio of blended monomers. The adhesive layer may contain an ultraviolet absorbing agent.

### 4-4. Protective sheet

A first protective sheet 74 is for protecting the adhesive layer 71 until the first protective sheet 74 is fixed to the imaging window 113 of the laminated glass 10, and the first protective sheet 74 is constituted by a resin sheet to which a release agent such as silicone or the like is applied. Similarly, a second protective sheet 75 is for protecting the antifog layer 73 until the second protective sheet 75 is fixed to the imaging window of the laminated glass, and the second protective sheet 75 is constituted by a resin sheet to which a release agent is applied. It is possible to adopt a known general release sheet in either case.

### 4-5. Method for manufacturing antifog sheet

Next, a method for manufacturing the antifog sheet 7 will be described with reference to FIGS. 6 and 7. The method for manufacturing an antifog sheet according to this embodiment includes a first step, a second step, and a third step. First, the first step will be described. The antifog layer 73 is formed on one surface of the base film 72 in the first step. The above-described coating solution for an organic-inorganic composite antifog layer (a solution for an antifog film) is prepared. Then, as shown in FIG. 6, the base film 72 is unrolled from a first roll 81 around which the base film 72 is wrapped, and the base film 72 is coated with the coating solution by a coating machine 82, and is then passed through a first heating furnace 83. Then, the base film 72 that has passed through the first heating furnace 83 is wrapped around a second roll 84.

It is preferable to keep the relative humidity of an atmosphere below 60%, even 40% or less when applying the coating solution. If the relative humidity is kept low, it is possible to prevent the organic-inorganic composite antifog layer from excessively absorbing moisture from the atmosphere. If a large amount of moisture is absorbed from the atmosphere, there is a risk that the strength of the film will be reduced by moisture that enters the matrix of the organic-inorganic composite antifog layer and remains therein.

It is preferable to apply heat at a temperature of 200°C or less, for example, at 50 to 150°C, in the first heating furnace 83. The heating time is preferably 1 to 20 minutes, and more preferably 2 to 10 minutes. Also, heating can be performed multiple times. It is also possible to perform heating for 3 to 5 minutes two times or more, for example. A coating solution is fired to form a cross-linked structure of the water absorbent resin and Si in this manner. However, this structure is not a strong cross-linked structure in which the coating solution is thoroughly fired, but a structure in which an antifog film is tentatively formed.

Next, the second step will be described. As shown in FIG. 7, the base film 72 is unrolled from the above-described second roll 84 and the base film 72 is passed through a water tank 85 in the second step. Accordingly, the antifog layer 73 swells on the base film 72, and some crosslinking points are cut. Also, impurities contained in the water absorbent resin, such as Na and Cl, are removed, for example. Furthermore, the uncrosslinked water absorbent resin composition is also removed. Water stored in the water tank 85 may be set to 10°C to 80°C, more preferably 20°C to 60°C, and particularly preferably 25°C to 50°C, for example. Although the temperature of the water may be less than 10°C, if the temperature thereof is lower than 10°C, the effect of removing alkaline components may be impaired. On the other hand, if the temperature thereof is higher than 80°C, the amount of water vapor evaporating from the water tank may increase, and the load on the equipment and operation environment may increase . From the above-described viewpoint, the temperature of water is particularly preferably 25°C to 50°C in order to reduce the load on the equipment and environment while keeping the effect of removing alkaline components relatively high. Also, the time for which the film is passed through the water tank can be set to 1 to 30 minutes, more preferably 3 to 20 minutes, and particularly preferably 3 to 10 minutes, for example. Even if the temperature of the water is low and the efficiency of removing alkaline components is low as described above, it is possible to remove a sufficient amount of alkaline components by increasing the immersion time. However, it is particularly preferable to set the immersion time to 3 to 10 minutes because, the longer immersion time is, the more production efficiency decreases. As described above, it is possible to immerse the film in water at 25°C to 50°C for about 3 to 10 minutes, for example. Also, it is possible to perform this water treatment multiple times. As a result of performing water treatment multiple times in this manner, it is possible to obtain the later-described effects even in a small water tank without increasing the size of the water tank.

Then, the base film 72 that has passed through the water tank 85 is passed through the second heating furnace 86. The swollen antifog layer is fired in the second heating furnace 86, and the cross-linked structure of the water absorbent resin and Si remaining in the antifog layer is strengthened. The heating temperature in the second heating furnace is preferably set to 200°C or less, for example, 50°C to 150°C as in the first heating furnace. Also, the heating time is longer than that in the first heating furnace, and is preferably set to 3 to 60 minutes, and more preferably 5 to 30 minutes. The antifog layer 73 is sufficiently fired, and the antifog layer 73 is completed in this manner. Then, the base film 72 that has passed through the second heating furnace 86 is wrapped around a third roll 87. The antifog sheet is completed through the above-described processes.

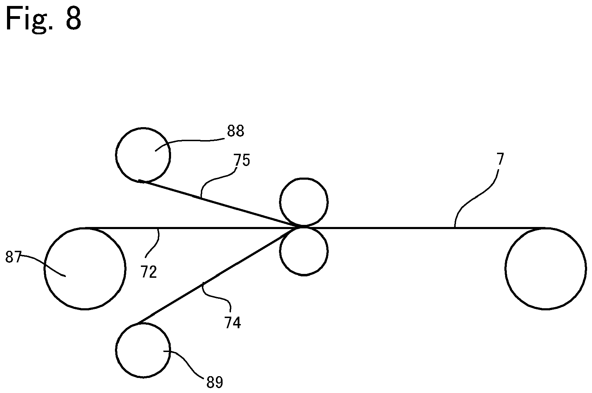

Lastly, the third step will be described. As shown in FIG. 8, the first protective sheet 74 to which the adhesive layer 71 is applied, and the second protective sheet 75 are bonded to the base film 72 unrolled from the third roll 87 in the third step. That is to say, the second protective sheet 75 is unrolled from a fourth roll 88, is bonded to the antifog layer 73 on the base film 72, and is pressed by a roller. The first protective sheet 74 to which the adhesive layer 71 is applied is unrolled from a fifth roll 89, is bonded to the surface of the base film 72 located opposite to the adhesive layer 71, and is pressed in a similar manner. The antifog sheet to which the first and second protective sheets 74 and 75 are bonded, that is, the antifog laminate 7, is completed in this manner.

### 5. Method for manufacturing wind shield

Next, a method for manufacturing a wind shield will be described. First, the mask layer 110 is layered on at least one of the outer glass plate 11 and the inner glass plate 12 formed into a predetermined shape. Then, these glass plates 11 and 12 are shaped to be curved. Although there is no particular limitation on the method therefor, known press-molding can be used, for example. Alternatively, after the outer glass plate 11 and the inner glass plate 12 are placed on each other on a mold, the mold is heated by passing the mold through a heating furnace. Accordingly, the glass plates 11 and 12 can be curved under their own weight.

After the outer glass plate 11 and the inner glass plate 12 are molded in this manner, a laminate is formed in which the interlayer 13 is sandwiched between the outer glass plate 11 and the inner glass plate 12. Note that the interlayer 13 is larger than the glass plates 11 and 12.

Then, the laminate is placed into a rubber bag, and preliminarily bonding is carried out at about 70°C to 110°C under vacuum suction. Preliminary bonding can be carried out using a method other than this method, and the following method can also be adopted. The above-described laminate is heated in an oven at 45°C to 65°C, for example. Subsequently, this laminate is pressed by a roll at 0.45 to 0.55 MPa. Then, the laminate is heated in an oven again at 80°C to 105°C, and is then pressed again by a roll at 0.45 to 0.55 MPa. Preliminary bonding is completed in this manner.

Then, permanent bonding is performed. The preliminarily bonded laminate is permanently bonded using an autoclave at a pressure of 8 to 15 atm and at 100°C to 150°C, for example. Specifically, permanent bonding can be performed under the conditions of 14 atm of pressure and a temperature of 135°C, for example. The interlayer 13 is bonded to the glass plates 11 and 12 through preliminary bonding and permanent bonding described above. Then, the interlayer 13 that protrudes from the outer glass plate 11 and the inner glass plate 12 is cut off.

Lastly, the above-described antifog sheet 7 is attached to the imaging window 113 formed in the mask layer 110. Specifically, the antifog sheet 7 is attached to the inner surface of the inner glass plate 12. First, the antifog laminate is prepared, and the first protective sheet 74 attached to the adhesive layer 71 is detached therefrom. Then, the exposed adhesive layer 71 is attached to the imaging window 113. Thereafter, the second protective sheet 75 is pressed to firmly fix the antifog sheet 7 to the imaging window 113. Lastly, the second protective sheet 75 is detached to expose the antifog layer 73, and thus attachment of the antifog sheet 7 is completed. Note that there is no particular limitation on the timing when the antifog sheet 7 is attached, and the antifog sheet 7 may be attached after the bracket is attached. Also, after the antifog sheet 7 is attached to the imaging window 113, and the bracket is attached, the second protective sheet 75 may be detached therefrom.

### 6. Features

According to the above-described wind shield, it is possible to obtain the following effects.
(1) As a result of the antifog sheet 7 being attached to the imaging window 113 of the mask layer 110, it is possible to prevent the imaging window 113 from fogging up. Thus, when light is received by the imaging device 2 via the imaging window 113, it is possible to prevent failures such as hindrance to the passage of light due to the imaging window 113 fogging up and inability to make accurate measurements.
   In particular, the upper portion of the mask layer 110 located inside the vehicle and provided with the imaging window 113 is likely to be cool and fog up even if a heating device is ON. Therefore, it is advantageous that the antifog layer is laminated at such a position. Also, the imaging window 113 of the mask layer 110 on which the antifog layer is laminated is covered by a bracket and a cover, and thus, there is an issue that warm air from a heating device or a defroster is unlikely to reach the imaging window 113. Also, there is an issue that air in the space covered by the bracket and the cover cannot be easily exchanged with air outside of this space, and thus, when the humidity of the air in the space reaches saturation, waterdrops are likely to adhere to the surface of the glass plates. Thus, it is very important to provide an antifog sheet in the space covered in the above-described manner.
(2) It is possible to remove impurities such as Na and Cl remaining in the antifog layer 73 because the film is immersed in water after the antifog layer 73 is tentatively produced in the first step at the time of manufacturing the antifog sheet 7. As will be described later, these Na and Cl impurities cause whitening following long-term use of the antifog layer 73. Therefore, whitening of the antifog layer 73 can be prevented by removing these impurities . In particular, the camera 2 takes images of the outside of the vehicle through the imaging window 113 to which the antifog layer 73 is attached in this embodiment, and thus, if the antifog layer 73 turns white, a whitened portion is included in the captured image, and image processing cannot be performed as appropriate. Therefore, it is possible to prevent the antifog layer 73 from turning white, and to perform appropriate image processing in this embodiment.
(3) Also, it is possible to remove uncrosslinked water absorbent resin remaining in the antifog layer 73 through water treatment. Like the remaining Na and Cl impurities, such an uncrosslinked water absorbent resin causes whitening following long-term use of the antifog layer 73. Uncrosslinked water absorbent resin remaining in the film bleeds out to the surface of the film and unevenly precipitates due to repeated hot and humid environments in summer and absorption and desorption of moisture over a long period of time, resulting in whitening of the surface of the film. Therefore, whitening caused by long-term use can be prevented by removing the uncrosslinked water absorbent resin. Also, it is possible to perform appropriate image processing.
(4) As described above, the antifog layer 73 is tentatively produced in the first step and is then immersed in water. However, the antifog layer 73 is not significantly fired in tentative production, and thus a strong cross-linked structure has not yet been formed. Therefore, when this antifog layer 73 is immersed in water, the antifog layer 73 swells, an unnecessary cross-linked structure that inhibits water absorbing properties is cut, and a required cross-linked structure that maintains the durability of the film remains. Thereafter, when the antifog layer 73 is sufficiently fired through second heating, the antifog layer 73 shrinks due to heat, and a stretchable cross-linked structure formed in a state in which the antifog layer 73 is swollen through immersion in water is maintained, and the water absorbing properties can be improved. Also, it is possible to form strong crosslinking points due to a stretchable cross-linked structure in the second firing, and to improve not only the durability of the antifog layer 73 but also the adhesion to the base film 72. If the antifog layer 73 is thoroughly fired in the first heating, the antifog properties may decrease because an unnecessary cross-linked structure that inhibits water absorbing properties is strongly formed. On the other hand, even if the antifog layer 73 is more thoroughly fired in the second firing than in the first firing, the antifog properties are unlikely to decrease because a skeletal structure has been already formed once. The degree of firing can be controlled by the firing temperature or the firing time, and the higher the temperature is, and the longer the firing time is, the more thoroughly the antifog layer 73 can be fired.

Note that, if polyvinyl acetal resin is used as a water absorbent resin, alkaline components such as Na and Cl present as impurities because the polyvinyl acetal resin contains these alkaline components. However, these alkaline components are not substantially present in at least the surface of the antifog layer 73 according to this embodiment. Accordingly, the above-described effects can be obtained. Note that "alkaline components are not substantially present" means that the spectrum of each alkaline component does not appear or is equal to or below the detection limit when measurement is made through EDX, for example. At this time, the depth to which electron beams (substantially, the depth at which characteristic X-rays are generated) enter through EDX is calculated to be about 5 µm as a result of simulation by the Monte Carlo method. Thus, "the antifog film has a layer that does not contain an alkaline component on a surface of the antifog layer" according to the present invention refers to a layer located substantially 5 µm from the surface of the antifog layer 73. Note that an example of a used device according to EDX will be described in Examples, which will be described later.

### 7. Modified Examples

Although the embodiment of the present invention has been described above, the present invention is not limited to the above-described embodiment, and various modifications can be carried out without departing from the gist of the invention. Note that the following modified examples can be combined as appropriate.

### 7-1

A portion or the entirety of the mask layer 110 may be composed of a blocking film that is attachable to the laminated glass 10, and the field of view from the outside of the vehicle may be blocked by the blocking film. Note that, if the blocking film is attached to a surface of the inner glass plate 12 on the vehicle exterior side, the blocking film can be attached thereto before preliminary bonding is performed, or after permanent bonding is performed.

Also, in the laminated glass 10, the mask layer 110 is not always required, and the antifog sheet needs only be attached to a region (imaging window: information acquisition region) through which light passes, from the viewpoint of preventing a region through which light passes from fogging up.

### 7-2

In the above-described embodiment, the imaging device 2 that has a camera is used as the information acquisition device of the present invention, but there is no limitation to this, and various information acquisition devices can be used. That is, there is no limitation as long as the information acquisition device emits and/or receives light in order to acquire information from the outside of the vehicle. Various devices can be used such as a light receiving device for receiving signals from the outside of the vehicle that are emitted by a laser radar, a light sensor, a rain sensor, an optical beacon, or the like. Also, an opening (an information acquisition region) such as the above-described imaging window 113 can be provided in the mask layer 110 as appropriate, and a plurality of openings can also be provided according to the type of light. If a stereo camera is provided, two imaging windows are formed in the mask layer 110, and an antifog sheet is attached to each imaging window, for example. Note that the information acquisition device may or may not come in contact with glass.

Also, although the imaging window 113 formed in the mask layer 110 has been described as one example of the information acquisition region in the above-described embodiment, there is no particular limitation on the form of the imaging window 113. The imaging window 113 need not have a closed shape surrounded by the mask layer 110, or may have a shape in which a portion of a peripheral edge is open. Also, the imaging window 113 need not be a region surrounded by the mask layer 110, and the antifog sheet can be attached to any region (information acquisition region) of the laminated glass 10 through which light from the information acquisition device passes.

### 7-3

Although water is used to produce the antifog sheet 7 in the above-described embodiment, there is no limitation thereto. The antifog layer 73 may be immersed in a solution in which water and alcohol are mixed together, for example. Also, as will be described later, the same effect can be obtained even in water at room temperature or lower, although the effect thereof is inferior to that of just water. It is possible to simplify manufacturing equipment by using water at room temperature, for example.

### 7-4

Although Na is an example of an alkaline component, which is an impurity that causes whitening in the above-described embodiment, there is no limitation thereto. In addition to Na, examples of such an alkaline component include K, Mg, and Ca that can be added to the water absorbent resin. Therefore, a "layer that does not contain an alkaline component according to the present invention" refers to a layer that contains no alkali metals or alkaline earth metals, that is, a layer in which alkaline components are not substantially present.

### 7-5

Although an example was described in the above-described embodiment in which the base film 72 on which the antifog layer 73 is layered is attached to the imaging window 113, it is also possible to form an antifog film by directly coating the imaging window 113 with a solution for an antifog film without using the base film 72. It is possible to form an antifog film only on the imaging window 113 by masking the peripheral edge portion of the imaging window 113 and applying a solution for an antifog film, for example.

### Examples

Hereinafter, examples of the present invention will be described. However, the present invention is not limited to the following examples. Hereinafter, the performance of antifog sheets is evaluated.

### (A) Examination of effect of water treatment 1

As described above, the tentatively fired antifog sheet was immersed in water in the second step in the production of the antifog sheet, and the effect thereof was examined.

### (1) Preparation of antifog sheets according to examples and comparative examples.

Antifog sheets were prepared as follows as test samples.

### (i) Base film

A PET film having a thickness of 50 µm (Teijin R Tetron R film HB manufactured by TEIJIN Solutions) was used.

### (ii) Antifog layer

87.5 mass% of a solution containing a polyvinyl acetal resin ("S-LEC KX-5" manufactured by Sekisui Chemical Co. , Ltd.; a solid content is 8 mass%, the degree of acetalization is 9 mol%, and an acetal structure derived from benzaldehyde is included), 0.10 mass% of 3-glycidoxypropyltrimethoxysilane (GPTMS, "KBM-403" manufactured by Shin-Etsu Chemical Co., Ltd.), 0.26 mass% of n-hexyltrimethoxysilane (HTMS, "KBM-3063" manufactured by Shin-Etsu Chemical Co., Ltd.), 1.39 mass% of tetraethoxysilane (TEOS, "KBE-04" manufactured by Shin-Etsu Chemical Co., Ltd.), 7.86 mass% of an alcohol solvent ("Solmix AP-7" manufactured by Alcohol Trading Co., Ltd.), 2.87 mass% of purified water, 0.01 mass% of hydrochloric acid serving as an acid catalyst, and 0.01 mass% of a leveling agent ("KP-341" manufactured by Shin-Etsu Chemical Co., Ltd.) were placed in a glass container, and stirred at room temperature (25°C) for 3 hours. A coating solution for an antifog film was thus prepared.

### (iii) Adhesive layer

An adhesive agent used was prepared by copolymerizing methyl acrylate and acrylic acid n-butyl at a predetermined blending ratio, and dissolving, in toluene, a polymer that was adjusted such that the glass transition temperature Tg thereof was -36°C. An adhesive layer was formed by applying this liquid using a Meyer bar.

### (iv) Manufacturing process

An antifog sheet was produced based on the above-described embodiment. First, a coating solution for an antifog film was applied to the above-described base film, and was passed through a heating furnace at 90°C for 5 minutes in the first step. Then, the film was immersed in water at 50°C for 10 minutes and passed through the heating furnace at 110°C for 10 minutes in the second step in Example 1. On the other hand, with comparative example, treatment for immersion in water was omitted. Thereafter, an adhesive layer was formed on the base film. The antifog sheet produced in this manner was attached to a 100 mm square glass plate.

Here, Example 1 and Comparative Example 1 that differed only in whether or not water treatment was performed were prepared in one manufacturing lot, and these examples were prepared from five lots.

### (2) Evaluation regarding whitening

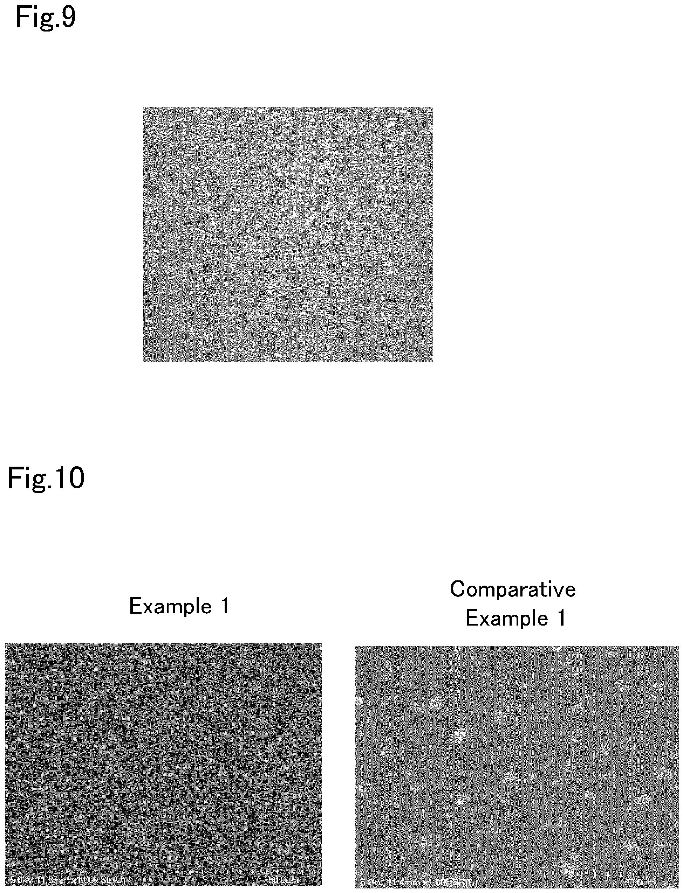

A high-temperature test was performed in which Example 1 and Comparative Example 1 that were prepared as described above were kept at 110°C for 500 hours. As a result, whitening was visually confirmed in Comparative Example 1, whereas no whitening was confirmed in Example 1. When the surfaces of the antifog films of Comparative Example 1 were observed using an optical microscope, as shown in FIG. 9, innumerable foreign substances several tens to several hundreds of micrometers in size were confirmed. Also, Example 1 and Comparative Example 1 were observed through SEM. The results thereof are shown in FIG. 10, and foreign substances were confirmed in Comparative Example 1, whereas no foreign substances were confirmed in Example 1.

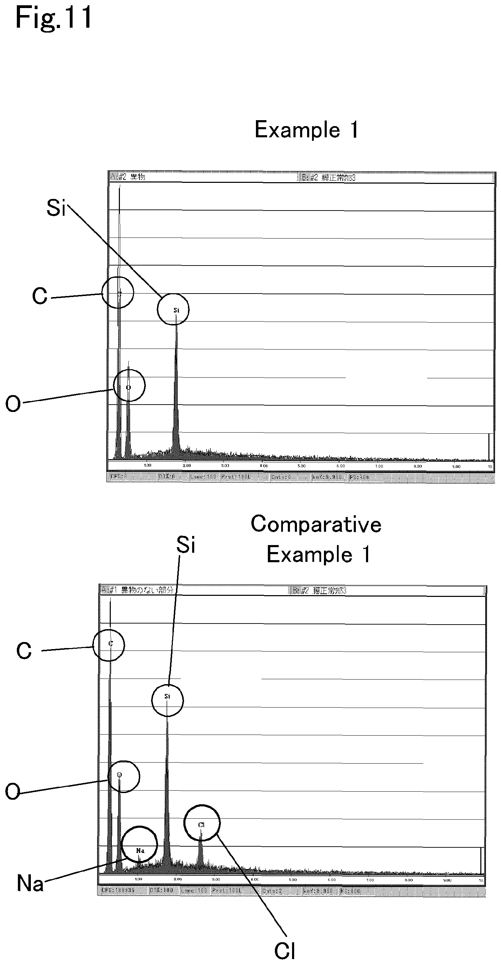

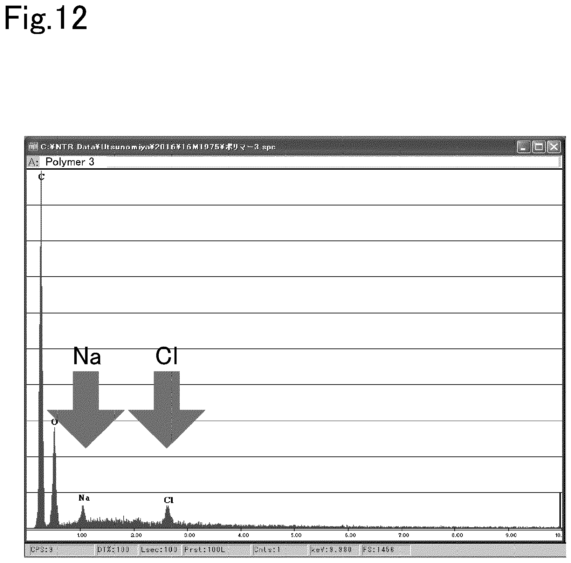

When Example 1 and Comparative Example 1 obtained after a high-temperature test was conducted were analyzed through EDX (energy-dispersive X-ray spectroscopy), the results shown in FIG. 11 were obtained. That is to say, the spectra of Na and Cl were confirmed in Comparative Example 1, whereas the spectra thereof were not confirmed in Example 1. Note that, when the polyvinyl acetal resin-containing solution that was used as a water absorbent resin was analyzed through EDX, the spectra of Na and Cl were confirmed as shown in FIG. 12. Therefore, it is conceivable that, although Na and Cl, which were impurities, were removed from Example 1 through water treatment, Na and Cl remained in Comparative Example 1, which caused whitening. Note that a device according to EDX used here was as follows.
- Field emission scanning electron microscope S-4700 (Hitachi High-Tech Corporation)
- EDX detector Falcon (EDAX)
- Acceleration voltage 15 kV

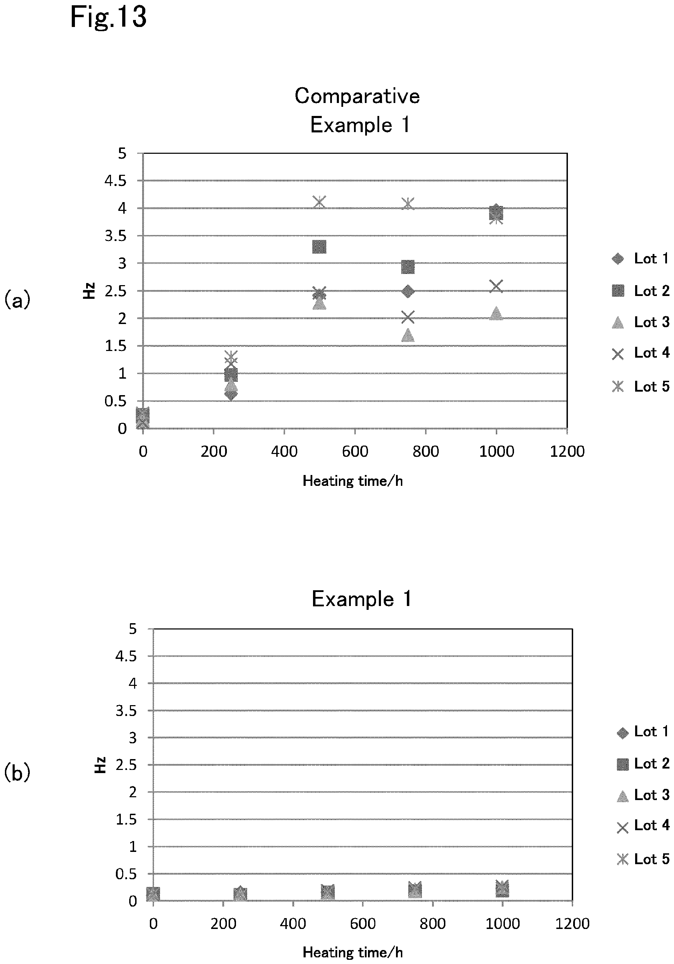

Also, with regard to Example 1 and Comparative Example 1, the Haze ratio was checked. That is to say, four samples according to Example 1 and Comparative Example 1 were kept at 110°C respectively for 250 hours, 500 hours, 750 hours, and 1000 hours, and the Haze ratio was measured. The Haze ratio was measured using a Haze meter Hz-V3 manufactured by Suga Test Instruments Co., Ltd. The results thereof are shown in FIG. 13. As shown in FIG. 13, it was found that, with regard to Comparative Example 1, the Haze ratio increased as the testing time increased, and by the time 1000 hours passed, the Haze ratio was about 2% to 4% higher than that compared to the Haze ratio obtained before the test was conducted. That is to say, it was found that whitening had an influence thereon. On the other hand, with Example 1, there was almost no increase in the Haze ratio. From the above-described test, it was found that Example 1 can prevent whitening even if it is used over a long period of time.

### (3) Evaluation regarding antifog performance

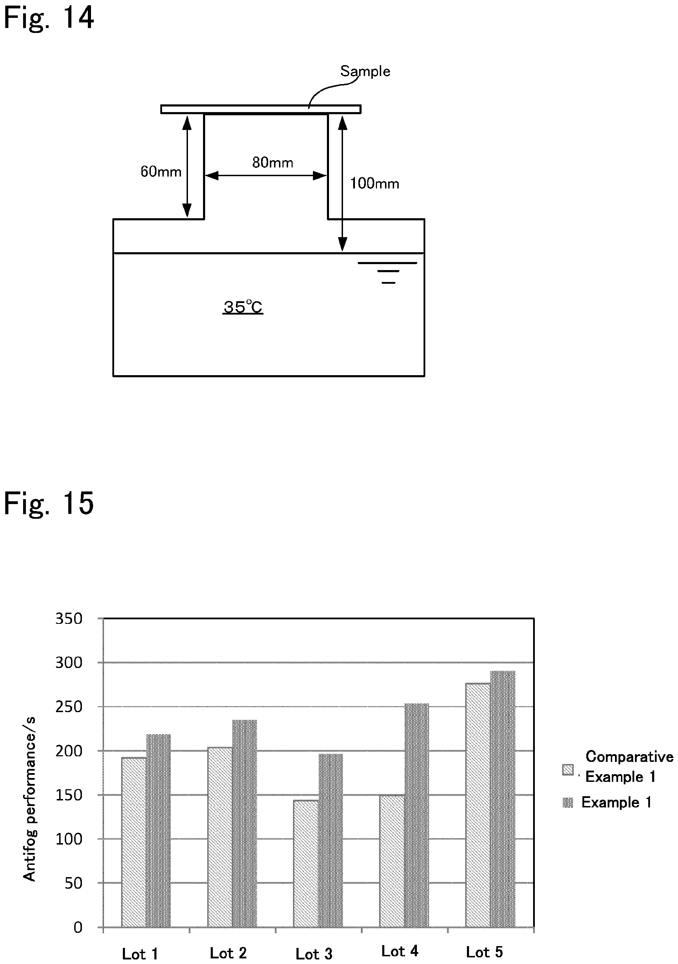

Then, antifog performance was evaluated. As shown in FIG. 14, a cylinder having an inner diameter of 80 mm and an axial length of 60 mm was prepared, and the cylinder was disposed at an upper portion of a water tank in which water kept at 35°C was stored. At this time, the distance between an upper end of the cylinder and the water surface of the water tank was set to 100 mm.

Subsequently, Example 1 and Comparative Example 1 were arranged to cover the upper opening in the cylinder. At this time, the antifog layer was disposed to face downward and face the water. Then, the time taken until the antifog layer became fogged up was measured. The results thereof are shown in FIG. 15, and it took a longer time for Example 1 in all of the lots to become fogged up, than for Comparative Example 1. In this respect, as a result of the antifog film placed in a hot and humid environment efficiently taking water vapor into the inner portion of the antifog film, it is possible to prevent the surface of the antifog film from fogging up due to water remaining on the surface of the antifog film. However, it is conceivable that sufficient antifog performance cannot be obtained because dispersion of water vapor into the antifog film is inhibited due to the alkaline components remaining on the surface of the antifog film of Comparative Example 1 that was not immersed in water. Therefore, as shown in FIG. 15, it is conceivable that Comparative Example 1 was inferior in the antifog performance to Example 1 that was immersed in water. As described above, it was found that the amount of water absorption and antifog performance were higher in Example 1 than in Comparative Example 1.

### (b) Examination of effect of water treatment 2

Next, whitening of the antifog layer due to dew condensation, that is, whitening based on water absorbent resin remaining on the surface of the antifog layer, was examined. Here, Examples 2 to 5 were newly prepared. Although these examples were different from Example 1 in the water treatment in the second step as described below, the other manufacturing methods were the same.
- Example 2: immersed in water at room temperature for 3 minutes
- Example 3: immersed in mixture of water at room temperature and alcohol (Solmix AP-7 manufactured by Alcohol Trading Co., Ltd.) for 3 minutes
- Example 4: immersed in water at 50°C for 10 minutes
- Example 5: immersed in water at 50°C for 60 minutes

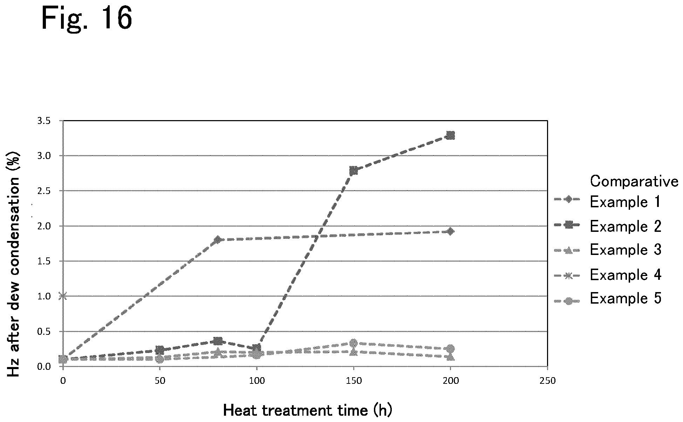

Then, four samples for each of Examples 2 to 5 and Comparative Example 1 were prepared, and were kept at 110°C respectively for 50 hours, 100 hours, 150 hours, and 200 hours. Then, after the high temperature tests were conducted, Examples 2 to 5 and Comparative Example 1 were kept at a temperature of 60°C and a humidity of 95% for 1 hour to cause dew condensation, and then the Haze ratio was measured. The results thereof are shown in FIG. 16. As shown in FIG. 16, with the comparative example, it was found that the Haze ratio increased when 50 hours had passed. On the other hand, with Example 2, although the Haze ratio did not increase until 100 hours had passed, the Haze ratio increased when 150 hours had passed. In contrast, with Examples 3 to 5, the Haze ratio hardly increased even when 200 hours had passed.

Based on the above-described results, it is conceivable that uncrosslinked water absorbent resin was removed through immersion in either water kept at room temperature or warmed water, and the effect of water treatment was observed, compared with the case where no water treatment was performed. However, it was confirmed that water at 50°C or an aqueous alcohol solution was more effective than water at room temperature. Also, there was little difference between the effects of treatment with water at 50°C and treatment with an aqueous alcohol solution. Further, the duration of the water treatment time had little effect on an increase in the Haze ratio. It was found that whitening of the antifog films even in harsh environments where dew condensation occurs can be prevented by performing water treatment as in Examples 2 to 5 in this manner.

### List of Reference Numerals

- 1: Laminated glass

- 11: Outer glass plate
- 12: Inner glass plate
- 13: Interlayer
- 110: Mask layer
- 113: Imaging window (information acquisition region)
- 7: Antifog sheet
- 71: Adhesive layer
- 72: Base film
- 73: Antifog layer

## Claims

1. A wind shield on which an information acquisition device configured to acquire information from an outside of a vehicle by emitting and/or receiving light can be arranged, the wind shield comprising:
a laminated glass; and
an antifog film that is arranged on a surface on a vehicle interior side of the laminated glass, and that contains a water absorbent resin,
wherein the antifog film has a layer that does not contain an alkaline component on a surface of the antifog film.

2. The wind shield according to claim 1,
wherein the antifog film has a thickness of 2 to 20 µm.

3. The wind shield according to claim 1 or 2,
wherein the antifog film contains a water repellent group.

4. A method for manufacturing an antifog sheet that is attachable to a wind shield on which an information acquisition device configured to acquire information from an outside of a vehicle by emitting and/or receiving light can be arranged, the method comprising:
a first step of applying, to a base sheet, a solution for an antifog film containing a water absorbent resin;
a second step of tentatively producing an antifog film by curing the solution for an antifog film by heating the base sheet;
a third step of immersing the base sheet in water; and
a fourth step of producing the antifog film by heating the base sheet.

5. The method for manufacturing an antifog sheet according to claim 4,
wherein the water has a temperature of 10°C to 80°C.

6. The method for manufacturing an antifog sheet according to claim 4,
wherein the water contains alcohol.
